Europäisches Patentamt

(19) European Patent Office

Office européen des brevets

(11) Veröffentlichungsnummer : **0 062 283 B2**

(12) # NEUE EUROPÄISCHE PATENTSCHRIFT

(45) Veröffentlichungstag der neuen Patentschrift :
27.12.91 Patentblatt 91/52

(51) Int. Cl.⁵ : **C08L 71/12, C08L 51/04, C08L 53/02**

(21) Anmeldenummer : 82102665.5

(22) Anmeldetag : 30.03.82

(54) **Schlagzähe thermoplastische Formmassen.**

Die Akte enthält technische Angaben, die nach dem Eingang der Anmeldung eingereicht wurden und die nicht in dieser Patentschrift enthalten sind.

(30) Priorität : 07.04.81 DE 3113953

(43) Veröffentlichungstag der Anmeldung :
13.10.82 Patentblatt 82/41

(45) Bekanntmachung des Hinweises auf die Patenterteilung :
02.10.85 Patentblatt 85/40

(45) Bekanntmachung des Hinweises auf die Entscheidung über den Einspruch :
27.12.91 Patentblatt 91/52

(84) Benannte Vertragsstaaten :
BE DE FR GB NL

(56) Entgegenhaltungen :
DE-A- 2 258 896
DE-A- 2 434 848
DE-A- 2 713 509
DE-A- 2 750 515
DE-C- 1 694 257
DE-C- 2 119 301
US-A- 4 252 913

(73) Patentinhaber : **BASF Aktiengesellschaft
Carl-Bosch-Strasse 38
W-6700 Ludwigshafen (DE)**

(72) Erfinder : **Brandstetter, Franz, Dr.
Ritterbuechel 45
W-6730 Neustadt (DE)**
Erfinder : **Echte, Adolf, Dr.
Leuschnerstrasse 42
W-6700 Ludwigshafen (DE)**
Erfinder : **Haaf, Franz, Dr.
Leistadter Strasse 9
W-6702 Bad Duerkheim (DE)**
Erfinder : **Naarmann, Herbert, Dr.
Haardtblick 15
W-6719 Wattenheim (DE)**

## Beschreibung

Die Erfindung betriff neue thermoplastische Formmassen auf der Grundlage von schlagfest modifizierten Styrolpolymerisaten und Polyphenylenethern.

Thermoplastische Massen, die sich zur Herstellung von Formteilen eignen und die mit einem Kautschuk schlagzäh modifizierte Styrolpolymerisate und Polyphenylenether enthalten, sind z. B. aus US-A-3 383 435, 4 128 602 sowie 4 128 603 bekannt. Solche Formmassen eignen sich zur Herstellung von Formteilen, die im Vergleich zu solchen aus schlagzäh modifizierten Styrolpolymerisaten, die nicht mit Polyphenylenethern abgemischt sind, eine bessere Wärmeformbeständigkeit haben. In diesen bekannten Formassen weist die Weickomponente des schlagzäh modifizierten Styrolpolymerisates eine Teilchendurchmesserverteilung im Bereich von 2 bis 10 µm auf (DE-A 21 18 301 ≙US 4 128 602 und 4 128 603). Es war bekannt, die Teilchendurchmesser zu variieren. So wurde in DE-A 22 58 856 eine Teilchendurchmesserverteilung beschrieben, in der 85 bis 100 % der Teilchen kleiner als 0,5 µm und 0 bis 15 % größer als 0,5 µm sind. Gemäß DE-A 21 19 301 tritt bei mittleren Teilchendurchmessern zwischen 1 und 2 µm ein Maximum der Schlagzähigkeit auf. Für schlagzäh modifiziertes Polystyrol wird von A. Echte, "Angewandte Makromolekulare Chemie", Band 58/59 (1977) 372, ebenfalls ein Maximum der Schlagzähigkeit bei mittleren Teilchendurchmessern der Teilchen der Weichkomponente von 1 bis 2 µm beschrieben. Auch sind bereits Formmassen bekannt, die außer schlagzäh modifizierten Styrolpolymerisaten und Polyphenylenethern lineare oder sternförmige hydrierte Styrol enthaltende Blockcopolymerisate enthalten (z.B. US-A-4 167 507). Aus derartigen Formmassen lassen sich Formteile herstellen, die sich durch besonders hohe Schlagzähigkeit auszeichnen. Ihre sonstigen Materialeigenschaften sind im allgemeinen befriedigend, doch hat es sich gezeigt, daß die Formmassen ein ungünstiges Fließverhalten besitzen.

Es bestand daher die Aufgabe, thermoplastische Formmassen auf der Grundlage von schlagfest modifizierten Styrolpolymerisaten und Polyphenylenethern zu schaffen, die zu Formteilen mit besonders hoher Schlagzähigkeit verarbeitet werden können und die eine verbesserte Fließfähigkeit besitzen.

Diese Aufgabe wird durch die erfindungsgemäßen Formmassen gelöst, die in schlagzäh modifiziertes Styrolpolymerisat, ein hydriertes Styrol enthaltendes Blockcopolymerisat und Polyphenylenether enthalten.

Gegenstand der Erfindung sind somit schlagzähe thermoplastische Formmassen, enthaltend

(A) 5 bis 90, vorzugsweise 20 bis 80 Gewichtsteile eines Gemisches aus

    (a) 50 bis 99 Gew.-%, bezogen auf (A) eines mit 2 bis 20 Gew.-% Kautschuk schlagzäh modifizierten Styrolpolymerisats und

    (b) 1 bis 50 Gew.-%, bezogen auf (A) eines hydrierten, Styrol enthaltenden Blockcopolymerisats,

(B) 95 bis 10, vorzugsweise 80 bis 20 Gewichtsteile eines Polyphenylenethers, sowie

(C) gegebenenfalls übliche Zusatzstoffe in wirksamen Mengen, wobei die Summe der Gewichtsteile A und B gleich 100 ist, dadurch gekennzeichnet, daß als Komponente (a) ein Gemisch von mit Kautschuk schlagzäh modifizierten Styrolpolymerisaten, deren Weichkomponenten unterschiedliche Teilchendurchmesser haben, in den Formmassen enthalten ist, so daß die Weichkomponenten der schlagzäh modifizierten Styrolpolymerisate ein Gemisch sind, das eine Teilchendurchmesserverteilung innerhalb des Bereiches von 0,5 bis 10 µm aufweist, 50 bis 98 Gew.-% der Teilchen der Weichkomponenten einen mittleren Teilchendurchmesser von gleich oder weniger als 1,0 µm und 50 bis 2 Gew.-% der Teilchen der Weichkomponenten einen mittleren Teilchendurchmesser von gleich oder größer als 2 µm aufweisen.

Besonders geeignet sind solche schlagzähen thermoplastischen Formmassen, bei denen 85 bis 95 Gew.-% der Teilchen der Weichkomponenten des schlagzäh modifizierten Styrolpolymerisats einen mittleren Teilchendurchmesser von gleich oder weniger als 1,0 µm und 15 bis 5 Gew.-% der Teilchen der Weichkomponentene des schlagzäh modifizierten Styrolpolymerisats einen mittleren Teilchendurchmesser von 4 bis 7 µm aufweisen.

Unter thermoplastische Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tabliettierung vorgeformt oder in Form von Platten und Bahnen vorliegen.

Unter mit Kautschuk schlagfest modifizierten Styrolpolymerisaten sollen Produkte verstanden werden, wie sie z. B. von A. Echte in "Angewandte Makromolekulare Chemie", Band 58/59 (1977) auf den Seiten 175 bis 198 beschrieben sind.

Die Herstellung der in den erfindungsgemäßen Formmassen enthaltenen mit Kautschuk schlagfest modifizierten Styrolpolymerisate erfolgt durch Mischen von mit Kautschuk schlagfest modifizierten Styrolpolymerisaten, deren Weichkomponenten unterschiedliche Teilchendurchmesser haben.

Unter Styrolpolymerisaten sind Polymerisate aus monovinylaromatischen Verbindungen zu verstehen. Monovinylaromatische Verbindungen sind z. B. Styrol oder am Kern oder an der Seitenkette durch Alkylreste substituierte Styrole.

Als Kautschuke werden die üblicherweise für die Schlagfestmodifizierung von Styrolpolymerisaten gebräuchlichen natürlichen oder synthetischen Kautschuke eingesetzt. Geeignete Kautschuke sind neben Naturkautschuk z. B. Polybutadien, Polyisopren und Mischpolymerisate, des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt, der zwischen 25 und 98 liegt.

Mit Kautschuk schlagfest modifizierte Polymerisate werden durch Polymerisation der monovinylaromatischen Verbindungen in Gegenwart des Kautschuks erhalten. Die Polymerisation nimmt man in an sich bekannter Weise in Masse, Lösung oder wäßriger Dispersion vor, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Ethylbenzol, die Xylole oder Gemische dieser Verbindungen.

Bei der Polymerisation in wäßriger Dispersion wird im allgemeinen auf den Zusatz von Lösungsmitteln verzichtet. Besonders günstig ist es, die Lösung des Kautschuks in den Monomeren bis zu einem Umsatz von etwa 45% in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren wie Benzoylperoxid, Dicumylperoxid, Di-tert-butylperoxid und Azo-diisobutyronitril oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol und teilverseifte Polyvinylacetate oder anorganische Dispergiermittel, z. B. von Bariumsulfat. Die Suspendiermittel werden im allgemeinen in Mengen von 0,1 bis 5 Gew.-%, bezogen auf die organische Phase, eingesetzt.

Bei der Polymerisation in Masse oder Lösung wird in der Regel in einem Temperaturbereich zwischen 50 und 250° C, vorzugsweise 100 bis 200° C, polymerisiert. Der Polymerisationsansatz muß dabei mindestens im ersten Abschnitt der Polymerisation, d. h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in US-A-2 694 692 und 2 862 906, auf die wegen weiterer Einzelheiten verwiesen werden soll.

Unter Weichkomponente im Sinne dieser Erfindung wird der bei Raumtemperatur (25°C) in Toluol unlösliche Anteil des mit Kautschuk schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z. B. bei Fischer, Die angew. Makrom. Chem. 33 (1973), S. 35 bis 64, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich als nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (siehe z. B. Freeguard, Brit. Polym. J. 6 (1974), S. 203 bis 228; Wagner, Robeson, Rubber Chem. Techn. 43 (1970), 1129 ff.).

Die Menge an Kautschuk, die vor der Polymerisation in den Monomeren unter Herstellung der Ausgangslösung gelöst wird, wird in Abhängigkeit von dem Endumsatz bei der Polymerisation zweckmäßig so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehaltes ist durch die Forderung, daß der Polyvinylaromat die kohärente Phase bilden muß, zu etwa 50 bis 60 Gew.-% gegeben. Für die erfindungsgemäßen thermoplastischen Formmassen hat sich dabei ein Weichkomponenten-Gehalt von 25 bis 35 Gewichtsprozent, bezogen auf das schlagfest modifizierte Polymerisat, als besonders günstig erwiesen. Der Kautschuk-Anteil des schlagfest modifizierten Polymerisats beträgt dann im allgemeinen zwischen 2 und 20 Gew.-%, vorzugsweise von 5 bis 15 Gew.-%.

Die Bestimmung der mittleren Teilchendurchmesser der dispersen Weichkomponenten kann z.B. durch Auszählung und Auswertung elektronenmikroskopischer Dünnschichtaufnahmen der schlagfest modifizierten Polymerisate erfolgen (verg. F. Lenz, Zeitschrift für Wiss. Mikroskopie, 63 (1956), S. 50/56).

Die Einstellung der Teilchendurchmesser der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d.h. bis zu einem Umsatz der Monomeren von gleich oder kleiner als 45%. Dabei ist der Teilchendurchmesser der dispersen Weichkomponenten-Phase um so größer, je kleiner die Rührerdrehzahl und damit je kleiner die Scherbeanspruchung ist. Der Zusammenhang zwischen der Rührgeswindigkeit und dem Durchmesser und der Verteilung der Kautschukteilchen im resultierenden schalgfesten Polymerisat ist z.B. in der zitieren Arbeit von Freeguard beschrieben, auf welche hinsichtlich weiterer Einzelheiten verwiesen wird. Die betreffende notwendige Rührgeschwindigkeit zur Erzielung des gewünschten Teilchendurchmessers der dispersen Weichkomponenten-Phase hängt unter anderem von den jeweiligen Apparateverhaltnissen ab und ist dem Fachmann bekannt bzw. läßt sich durch ein paar einfache Versuche bestimmten.

Der mittlere Teilchendurchmesser ( Gewichtsmittel ) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Equivalentdurchmesser dann abgegriffen werden. Die angegebenen mittleren Durchmesser stellen dabei einen Mittelwert von mindestens 5000 Teilchen dar.

Bei den hydrierten, Styrol enthaltenden Blockcopolymerisaten handelt es sich um Copolymere des Typs AB bzw. ABA bzw. (A—B)$_n$—X. Hierin steht A für einen nichtelastomeren Polymer-Block aus der monovinyl- oder monovinylidenaromatischen Verbindung, B für einen elastomeren hydrierten Block eines konjugierten Diens, n für eine ganze Zahl von mindestens 3 und X für den Rest eines multifunktionellen Kupplungsmittels, über den die Verzweigungen (A—B) des Blockcopolymerisates chemisch miteinander verbunden sind.

Monovinyl- und monovinylidenaromatische Verbindungen, die für den Aufbau der endständigen nicht-elastomeren Polymerblöcke der verzweigten Blockcopolymerisate in Betracht kommen, sind beispielsweise Styrol, die seitenkettenalkylierten Styrole, wie α-Methylstyrol, und die kernsubstituierten Styrole, wie Vinyltoluol und Äthylvinylbenzol. Die monovinyl- und monovinylidenaromatischen Verbindungen können auch in Mischung miteinander eingesetzt werden. Vorzugsweise wird jedoch Styrol allein verwendet.

Konjugierte Diene, die für die erfindungsgemäßen hydrierten Polymerisate insbesondere in Betracht kommen, sind beispielsweise Butadien-1,3 sowie Isopren. Diese Diene werden entweder allein oder in Mischung miteinander für die Herstellung der Blockcopolymerisate herangezogen.

Die Molekulargewichte der Blockcopolymerisate können in weiten Grenzen schwanken, jedoch werden bei sehr niedrigem Molekulargewicht unter 10 000 nur schlechte mechanische Werte für die Abmischungen erreicht, während bei sehr hohen Molekulargewichten, z. B. über 1000 000, die Einarbeitung schwierig wird. Das Blockcopolymerisat soll vorzugsweise zwischen 15 und 50 Gewichtsprozent Vinylaromaten enthalten.

Die Blockcopolymerisate können auf an sich bekannte Art und Weise durch aufeinanderfolgende Polymerisation der Monomeren in Lösung in Gegenwart eines Monolithium-Kohlenwasserstoffes als Initiator — gegebenenfalls durch anschließendes Kuppeln der erhaltenen aktiven, lebenden linearen Blockcopolymerisate mit einer multifunktionellen, reaktionsfähigen Verbindung als Kupplungsmittel — und nachfolgende selektive Hydrierung der olefinischen Doppelbindungen der erhaltenen Blockcopolymerisate hergestellt werden. Als Initiator geeignete Monolithium-Kohlenwasserstoffe sind solche der allgemeinen Formel RLi, worin R einen aliphatischen, cycloaliphatischen, aromatischen oder gemischt aliphatischen-aromatischen Kohlenwasserstoffrest mit 1 bis 12 Kohlenstoffatomen darstellt und insbesondere ein aliphatischer Kohlenwasserstoffrest ist. Beispielhaft seien genannt: Äthyllithium, (n-, sec-, tert-)Butyllithium, Isopropyllithium und Phenyllithium, wobein- und sec-Butyllithium besonders bevorzugt sind.

Als Lösungsmittel bei der Herstellung der Blockcopolymerisate dienen normalerweise inerte aliphatische, cycloaliphatische oder aromatische Kohlenwasserstoffe, wie z. B. n-Hexan, Heptan, Isooctan, Cyclohexan, Cycloheptan, Benzol und Toluol. Die Polymerisation wird dabei in Gegenwart geringer Mengen an polaren Lösungsmitteln, beispielsweise Aminen, Alkoholaten und insbesondere Äthern, wie Tetrahydrofuran, Dimethoxyäthan und Phenylmethyläther, durchgeführt. Die polaren Lösungsmittel werden im allgemeinen in Mengen von 0,05 bis 10 Gew.-%, vorzugsweise von 0,1 bis 2 Gew.-%, bezogen auf das gesamte Lösungsmittel, eingesetzt. Die Polymerisation erfolgt unter den für die anionische Polymerisation mit lithiumorganischen Verbindungen üblichen Bedingungen, wie z. B. in Inertgas-Atmosphäre unter Luft- und Feuchtigkeitsausschluß. Die Polymerisationstemperaturen liegen im allgemeinen zwischen 0 und 150° C und werden vorzugsweise zwischen 20 und 100° C gehalten.

Zur Herstellung von sternförmig verzweigten Blockcopolymerisate werden zunächst die monovinyl- bzw. monovinylidenaromatischen Verbindungen mit Hilfe der Monolithium-Kohlenwasserstoffe bis zur praktisch vollständigen Umsetzung der Monomeren polymerisiert, und anschließend wird zu der Lösung der resultierenden aktiven living-Polymerisate das Butadien zugesetzt, welches an die aktiven Kettenenden der zuvor gebildeten lebenden Polymerisate der monovinyl- bzw. monovinylidenaromatischen Verbindungen unter Bildung der Polybutadien-Blöcke angelagert wird. Nach Beendigung der Polymerisation, jedoch vor der Desaktivierung des Initiators, wird zu der Reaktionslösung eine multifunktionelle reaktive Verbindung als Kupplungsmittel zugesetzt. Das verwendete multifunktionelle Kupplungsmittel soll mindestens trifunktionell sein, d. h. es soll fähig sein, mindestens drei oder mehr der zuvor gebildeten aktiven linearen Blockcopolymerisate an deren endständigen Lithium-Kohlenstoff-Bindungen unter Ausbildung einer chemischen Verknüpfung miteinander zu verbinden, um ein einziges gekuppeltes und somit sternförmig verzweigtes Blockcopolymerisat zu bilden. Die Herstellung derart verzweigter Blockcopolymerisate durch Kupplung ist beispielsweise in der GB-A-985 614 beschrieben.

Als Kupplungsmittel eignen sich die bekannten multifunktionellen Verbindungen, beispielsweise Polyepoxide, wie epoxidiertes Leinsamenöl, Polyisocyanate, Polyhalogenide, Polyketone, Polyanhydride, Estergruppen enthaltende Verbindungen, insbesondere Dicarbonsäureester, wie Diäthyladipat, sowie polyvinylaromatische Verbindungen, insbesondere Divinylbenzol. Das multifunktionelle Kupplungsmittel wird der Reaktionslösung im allgemeinen in Mengen zugegeben, die äquivalent der Menge des eingesetzten Initiators sind. Die Kupplung kann bei der gleichen Temperatur wie die Polymerisation durchgeführt werden und erfolgt vorzugsweise im Temperaturbereich von 20 bis 100° C.

Anschließend an die Polymerisation und zweckmäßigerweise vor der Isolierung des Reaktionsproduktes aus der Reaktionslösung werden die olefinischen Doppelbindungen der erhaltenen Blockcopolymerisate selektiv hydriert. Die selektive Hydrierung kann dabei ebenfalls in üblicher Art und Weise mit Hilfe von molekularem Wasserstoff und Katalysatoren auf Basis von Metallen oder Metallsalzen der 8. Gruppe des Periodensystems durchgeführt werden, wie es beispielsweise in der US-A-3 113 986, der DE-B-1 222 260, der DE-A-2 013 263 oder der US-A-3 700 633 beschrieben ist. Hiernach wird die selektive Hydrierung der olefinischen Doppelbindungen vorzugsweise in homogener Phase mit Katalysatoren auf Basis von Salzen, insbesondere den Carboxylaten, Enolaten oder Alkoxiden, des Nickels, Cobalts oder Eisens, die mit Metallalkylen, insbesondere Aluminiumalkylen, reduziert sind, bei Wasserstoffdrücken zwischen 1 und 100 bar und Temperaturen zwischen 25 und 150° C vorgenommen. Die selektive Hydrierung wird so weit getrieben, bis der Gehalt an olefinischen Doppelbindungen in den Blockcopolymerisaten bis auf einen Restanteil von weniger als 10%, vorzugsweise weniger als 5%, reduziert worden ist. Der Restanteil der olefinischen Doppelbindungen wird durch Titration nach Wijs oder durch IR-spektroskopische Analyse bestimmt. Insbesondere wird bis zur praktisch vollständigen Reduzierung der olefinischen Doppelbindungen hydriert. Vorzugsweise wird die Hydrierung so geführt, daß dabei die aromatischen Doppelbindungen des Blockcopolymerisats nicht angegriffen werden.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein $\alpha$-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt sind Poly(2,6-dimethyl-1,4-phenylen)ether mit einer Grenzviskosität von 0,45 bis 0,65 dl/g (gemessen in Chloroform bei 30° C).

Die aromatischen Polyphenylenether können durch Selbstkondensation der entsprechend einwertigen Phenole durch Einwirken von Sauerstoff in Gegenwart eines Katalysatorsystems, wie es beispielsweise in US-A-3 219 625, 3 306 874, 3 306 875, 3 956 442, 3 965 069, 3 972 851 beschrieben ist, hergestellt werden.

Die Mischungen aus schlagfest modifizierten Styrolpolymerisaten, dem Blockcopolymerisat und dem Polyphenylenether werden auf den üblichen, zum Mischen von thermoplastischen Verbindungen verwendeten Vorrichtungen hergestellt, so können z. B. derartige Mischungen auf Knetern, Extrudern oder Walzenmischern erhalten werden.

Die Mischungen aus den schlagzäh modifizierten Styrolpolymerisaten und Polyphenylenethern und hydrierten Blockcopolymerisaten können außerdem weitere übliche Zusatzstoffe wie Pigmente, Farbstoffe, Füllstoffe, Flammschutzmittel, weitere verträgliche Polymere, Antistatika, Antioxidantien und Schmiermittel enthalten.

Im Vergleich zu bekannten Formmassen besitzen die erfindungsgemäßen eine hervorragende Kombination an guter Zähigkeit und Fließfähigkeit. Außerdem zeichnen sich die Massen durch eine gute Wärmeformbeständigkeit und weitere günstige mechanische Eigenschaften aus.

## Patentansprüche

1. Schlagzähe thermoplastische Formmassen, enthaltend
(A) 5 bis 90 Gewichtsteile eines Gemisches aus
    (a) 50 bis 99 Gew.-%, bezogen auf (A) eines mit 2 bis 20 Gew.-%. Kautschuk schlagzäh modifizierten Styrolpolymerisats und
    (b) 1 bis 50 Gew.-%, bezogen auf (A) eines hydrierten, Styrol enthaltenden Blockcopolymerisats,
(B) 95 bis 10 Gewichtsteile eines Polyphenylenethers, sowie
(C) gegebenenfalls übliche Zusatzstoffe in wirksamen Mengen, wobei die Summe der Gewichtsteile A und B gleich 100 ist,
dadurch gekennzeichnet, daß als Komponente (a) ein Gemisch von mit Kautschuk schlagzäh modifizierten Styrolpolymerisaten, deren Weichkomponenten unterschiedliche Teilchendurchmesser haben, in den Formmassen enthalten ist, so daß die Weichkomponenten der schlagzäh modifizierten Styrolpolymerisate ein Gemisch sind, das eine Teilchendurchmesserverteilung innerhalb des Bereiches von 0,5 bis 10 µm aufweist, 50 bis 98 Gew.-%. der Teilchen der Weichkomponenten einen mittleren Teilchendurchmesser von gleich oder weniger als 1,0 µm und 50 bis 2 Gew.-% der Teilchen der Weichkomponenten einen mittleren Teilchendurchmesser von gleich oder großer als 2 µm aufweisen.

## Claims

1. A tough thermoplastic molding composition containing
(A) from 5 to 90 parts by weight of a mixture of
    (a) from 50 to 99% by weight, based on (A), of a styrene polymer which has been impact modified with from 2 to 20% by weight of a rubber and
    (b) from 1 to 50%, based on (A), of a hydrogenated block copolymer which contains styrene, and
(B) from 95 to 10 parts by weight of a polyphenylene ether, with or without
(C) customary additives in effective amounts, the sum total of the parts by weight of A and B being equal to 100,
wherein component (a) comprises a mixture of rubber-modified styrene polymers whose soft components have different particle diameters so that the soft components of the modified styrene polymers comprise a mixture which has a particle diameter distribution within the range from 0.5 to 10 µm, from 50 to 98% by weight of the particles of the soft components have an average particle diameter of equal to or less than 1.0 µm and from 50 to 2% by weight of the particles of the soft components have an average particle diameter of equal to or greater than 2 µm.

## Revendications

1. Matières à mouler thermoplastiques résilientes, contenant
(A) 5 à 90 parties en poids d'un mélange de
    (a) 50 à 99 % en poids par rapport à (A) d'un polymère du styrène modifié par 2 à 20 % en poids de caoutchouc de manière à la rendre résistant au choc et
    (b) 1 à 50 % en poids par rapport à (A) d'un copolymère à blocs, contenant du styrène, hydrogéné,
(B) 95 à 10 parties en poids d'un poly(éther de phénylène), comme aussi

6

(C) éventuellement des additifs usuels en proportions efficaces, la somme des parties en poids de A et de B étant égale à 100,

caractérisées en ce qu'à titre de composante (a), les matières à mouler contiennent un mélange de polymères du styrène modifiés par du caoutchouc de manière à les rendre résistants au choc, dont les composantes molles possèdent des diamètres des particules différents, de manière telle que les composantes molles des polymères du styrène modifiés pour résister au choc forment un mélange qui présente une répartition du diamètre des particules qui se situe dans la plage de 0,5 à 10 µm, 50 à 98 % en poids des particules des composantes molles présentent un diamètre moyen égal ou inférieur à 1,0 µm et 50 à 2 % en poids des particules des composantes molles présentent un diamètre moyen égal ou supérieur à 2 µm.